# EUROPEAN PATENT APPLICATION

(11) **EP 3 418 176 A1**
(43) Date of publication of application: **26.12.2018**
(21) Application number: 17176739.5
(22) Date of filing: 19.06.2017
(51) Int. Cl.: B62M 6/50

(54) **CONTROL SYSTEM OF LEARNING APPLICATIONS FOR ELECTRIC BIKES**

(71) Applicant: Guan Hung Technology Co., Ltd., Taichung City 40861 (TW)
(72) Inventor: Lee, Wen-Sung, 40861 TAICHUNG CITY (TW)
(74) Representative: Cabinet Chaillot

(57) **Abstract**

A control system for an electric bike includes a controller which has a first Bluetooth transmitting unit connected to a mobile device by a wireless way. The mobile device includes a second Bluetooth transmitting unit, a detector and an operation application. The user calls a learning application which learns the operation application that currently operates the bike in different situations, and then the learning application takes over the control of the bike, Therefore, the user does not need a hand to operate the mobile device to control the bike.

## Description

### BACKGROUND OF THE INVENTION

### 1. Fields of the invention

The present invention relates to a control system of learning applications for electric bikes so as to control output of motor and battery of the electric bike.

### 2. Descriptions of Related Art

The main features of the conventional electric bikes are to utilize the motor to provide assistant force to the electric bike so that the user can easily and comfortably operate the electric bike regardless the road conditions. The structure of the conventional electric bikes involves a complicated structure which includes a gear system cooperated with a motor, and the motor is powered by a battery. Usually, the users are required to have a certain level of knowledge to the gear system to smoothly and quickly operate the electric bike.

Some applications are developed to assist the users to operate the electric bikes, and the applications can be downloaded to the controller or computer of the electric bikes so as to adjust the speed, the mileage, the average speed, the maximum speed, the minimum speed and the electric power of the battery. No application in the market is able to adjust the output of the motor and the battery. The existed applications can only provide different operational modes and cannot control output of the motor and the battery directly. Assume that the users may operate the control commands on the touch screen of mobile devices in the future, nevertheless, it is not safe if the user uses one hand to operate the mobile device, while only one hand controlling the handlebar.

The present invention intends to provide a control system which calls a learning application to learn the operational modes of the users in different road conditions, and then the learning application can take over the control of the electric bike without requiring the user to use one handle to operate the mobile device.

### SUMMARY OF THE INVENTION

The present invention relates to a control system for an electric bike which comprises a crank, a motor and a battery which powers the motor. The control system includes a controller installed to the bike and electrically connected to the motor and the battery. The controller has a first Bluetooth transmitting unit which is connected to a mobile device by wireless way. The mobile device is connected to the bike and includes a second Bluetooth transmitting unit, a detector and an operation application. The second Bluetooth transmitting unit of the mobile device detects the bike and generates multiple dynamic status values which are sent to the controller by the second Bluetooth transmitting unit of the mobile device. The controller sends commands to the motor and the battery to control output of the motor and the battery. The operation application receives the multiple dynamic status values and creates multiple operation options which are displayed on the touch screen of the mobile device. The operation application also sends the multiple operation options to the controller to control the bike. The mobile device is connected to a cloud and downwards a learning application from the cloud. The learning application learns the way that the operation application receives the multiple dynamic status values and imitates the operation options which are displayed on the touch screen of the mobile device. The learning application learns processes of operation of choosing the operation options, and learns processes of use of the operation options so as to take over the operation application to control the bike.

Preferably, the detector is a G-sensor.

Preferably, the multiple dynamic status values include the speed, the initial speed, the average speed, the G force, the average G force, the upward slope, the downward slope, and the acceleration of the bike that are detected by the G-sensor.

Preferably, the operation options that the learning application learns from the operation application include an economic mode, a racing mode and a balance mode.

Preferably, the operation options that the learning application learn from the operation application include a plus-force output and a minus-force output of the motor.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 shows the mobile device on the bike calls a learning application from the cloud;
Fig. 2 shows the arrangement of the control system of the present invention;
Fig. 3 shows that the user operates the mobile device to choose one from three modes, and
Fig. 4 shows that the user operates the mobile device to choose the plus-force output or the minus-force output.

### DETAILED DESCRIPTION OF THE PREFERRED EMBODIMENT

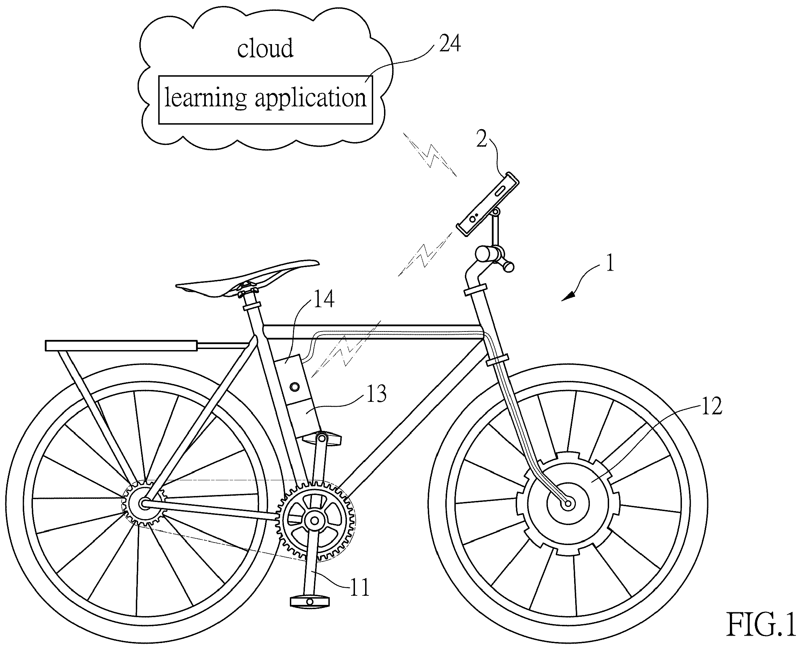

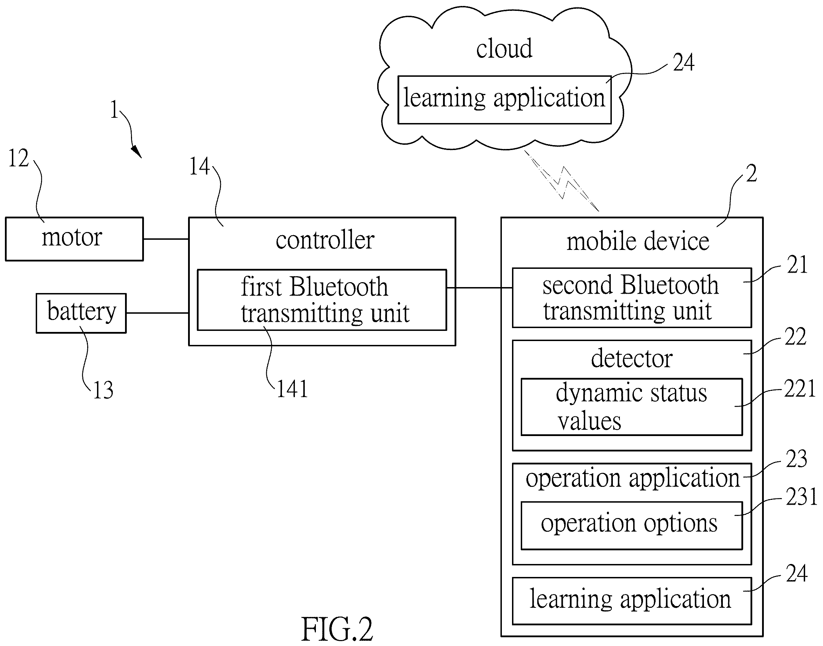

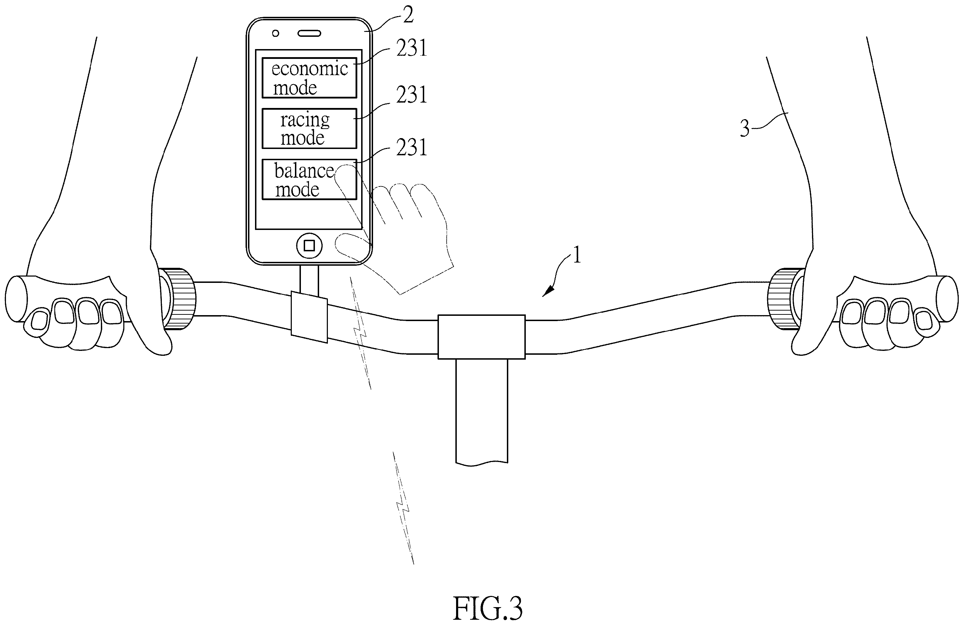

Referring to Figs. 1 to 3, the control system for an electric bike 1 includes a controller 14 installed to the bike 1 and electrically connected to the motor 12 and the battery 13 of the bike 1, wherein the motor 12 is powered by the battery 13, and the user 3 tread the crank 11 to move the bike 1 forward with the assistance of the output force from the motor 12. The controller 14 has a first Bluetooth transmitting unit 141 which is connected to a mobile device 2 by wireless way. The mobile device 2 is connected to the bike 1 and includes a second Bluetooth transmitting unit 21, a detector 22 and an operation application 23. Preferably, the detector 22 is a G-sensor. The second Bluetooth transmitting unit 21 of the mobile device 2 detects the bike 1 and generates multiple dynamic status values 221 which are sent to the controller 14 by the second Bluetooth transmitting unit 21 of the mobile device 2. The controller 14 sends commands to the motor 12 and the battery 13 to control output of the motor 12 and the battery 13. The multiple dynamic status values 221 include the speed, the initial speed, the average speed, the G force, the average G force, the upward slope, the downward slope, and the acceleration of the bike that are detected by the G-sensor.

The operation application 23 receives the multiple dynamic status values 221 and creates multiple operation options 231 which are displayed on the touch screen of the mobile device 2. The operation application 23 also sends the multiple operation options 231 to the controller 14 to control the bike 1. The mobile device 2 is connected to a cloud and downwards a learning application 24 from the cloud. The learning application 24 learns the way that the operation application 23 receives the multiple dynamic status values 221 and creates operation options 231, and displays the learning result on the touch screen of the mobile device 2. The learning application 24 learns processes of operation of choosing the operation options 231, and learns processes of use of the operation options 231 so as to take over the operation application 23 to control the bike 1.

The operation options 231 that the learning application 24 learns from the operation application 23 include an economic mode, a racing mode and a balance mode. The operation options 231 that the learning application 24 learn from the operation application 23 include a plus-force output and a minus-force output of the motor 12.

The users 3 generally use the original settings that are set when the control system is manufactured. The controller 14 receives the acceleration speed and the treading acceleration speed of the crank 11, and sends control signals to the motor 12 and the battery 13 to control the output of the motor 12 and the battery 13. The treading acceleration speed of the crank 11 can be detected by another detector that is located in the controller 14 or installed to the bike 1. When the controller 14 receives the acceleration speed from the dynamic status values 231, and the acceleration speed is smaller than the treading acceleration speed, the controller 14 judges that the resistance to the bike 1 increases, so that the output of the motor 12 and battery 13 is increased. On the contrary, when the acceleration speed is larger than the treading acceleration speed, the controller 14 judges that the resistance to the bike 1 reduces, so that the output of the motor 12 and battery 13 is reduced.

The user 3 downwards an operation application 23 form the cloud, the operation application 23 receives the multiple dynamic status values 221 and imitates the operation options 231 which are displayed on the touch screen of the mobile device 2. The operation options 231 include a plus-force output and a minus-force output of the motor 12.

When the user 3 downwards an learning application 24 form the cloud, the learning application 24 learns the way that the operation application 23 receives the multiple dynamic status values 221 and imitates the operation options 231 which are displayed on the touch screen of the mobile device 2. The learning application 24 learns processes of operation of choosing the operation options 231, and learns processes of use of the operation options 231 so as to take over the operation application 23 to control the bike 1.

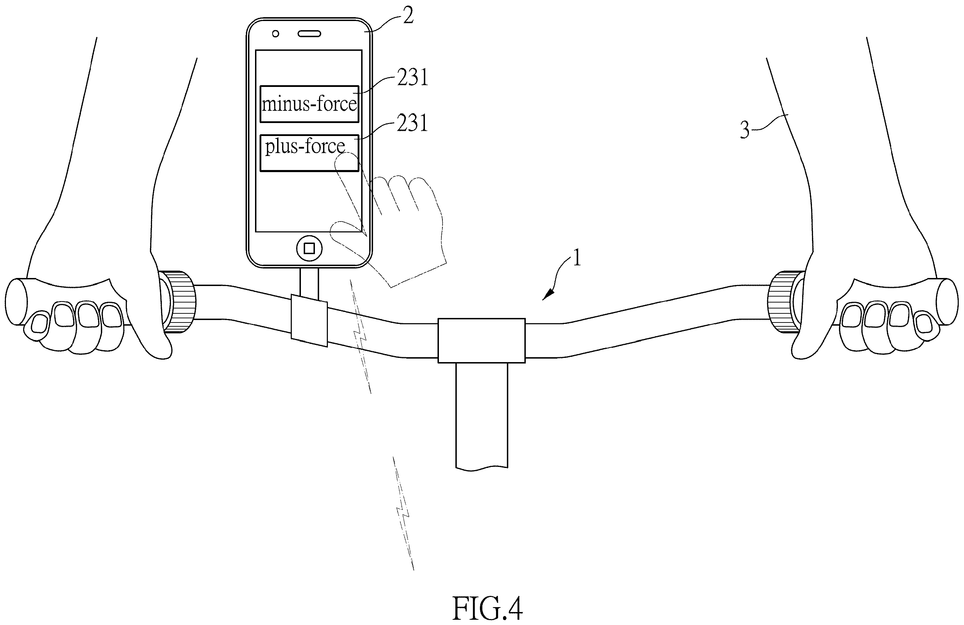

As shown in Fig. 4, the operation application 23 may display a plus-force output and a minus-force output of the motor 12 on the touch screen of the mobile device 2. The users 3 can choose one of the options according the road conditions which include the upward slope, the downward slope and the acceleration speed detected by the detector 22. The user 3 can directly choose the plus-force output or the minus-force output of the motor 12 to the bike 1. The learning application 24 also learns the operation mode that the specific user 3 operates the bike 1. After the learning application 24 takes the control of the bike 1, the user 3 does not need to choose the options from the mobile device 2 again, the learning application 24 can automatically adjust the output of the motor 12 and the battery 13 according to the change of the road situations.

While we have shown and described the embodiment in accordance with the present invention, it should be clear to those skilled in the art that further embodiments may be made without departing from the scope of the present invention.

## Claims

1. A control system for an electric bike (1) which comprises a crank (11), a motor (12) and a battery (13) which powers the motor (12), **characterized in that**:
the control system comprises a controller (14) is adapted to be installed to the bike (1) and electrically connected to the motor (12) and the battery (13), the controller (14) has a first Bluetooth transmitting unit (141) which is connected to a mobile device (2) by wireless way, the mobile device (2) includes a second Bluetooth transmitting unit (21), a detector (22) and an operation application (23), the mobile device (2) is adapted to be connected to the bike (1), the second Bluetooth transmitting unit (21) of the mobile device (2) is adapted to detect the bike (1) and generates multiple dynamic status values (221) which are sent to the controller (14) by the second Bluetooth transmitting unit (21) of the mobile device (2), the controller (14) sends commands to the motor (12) and the battery (13) to control output of the motor (12) and the battery (13), the operation application (23) receives the multiple dynamic status values (221) and creates multiple operation options (231) which are displayed on a touch screen of the mobile device (2), the operation application (23) sends the multiple operation options (231) to the controller (14) to be adapted to control the bike (1), the mobile device (2) is connected to a cloud and downward a learning application (24) from the cloud, the learning application (24) learns the way that the operation application (23) receives the multiple dynamic status values (221) and imitates the operation options (231) which are displayed on the touch screen of the mobile device (2), the learning application (24) learns processes of operation of choosing the operation options (231), and learns processes of use of the operation options (231) so as to take over the operation application (23) to be adapted to control the bike (1).

2. The control system as claimed in claim 1, wherein the detector (22) is a G-sensor.

3. The control system as claimed in claim 1, wherein the multiple dynamic status values (221) include speed, initial speed, average speed, G force, average G force, upward slope, downward slope, and acceleration of the bike (1) that are detected by the G-sensor.

4. The control system as claimed in claim 1, wherein the operation options (231) that the learning application (24) learn from the operation application (23) include economic mode, racing mode and balance mode.

5. The control system as claimed in claim 1, wherein the operation options (231) that the learning application (24) learn from the operation application (23) include a plus-force output and a minus-force output of the motor (12).
